# FASCICULE DE BREVET EUROPEEN

(11) **EP 3 913 343 B1**
(45) Date de publication et mention de la délivrance du brevet: **08.05.2024**
(21) Numéro de dépôt: 21171920.8
(22) Date de dépôt: 04.05.2021
(51) Int. Cl.: G01L 1/14, G01L 1/20, G01L 9/00, G01L 9/02, G01L 9/12

(54) **CAPTEUR D'APPUI SECURISE ET ECRAN TACTILE ASSOCIE**
GESICHERTER BERÜHRUNGSSENSOR UND ENTSPRECHENDER BERÜHRUNGSBILDSCHIRM
SECURE SUPPORT SENSOR AND ASSOCIATED TOUCH SCREEN

(30) Priorité: 18.05.2020 FR 2004932
(43) Date de publication de la demande: 24.11.2021
(73) Titulaire: Wisetec Group, 69200 Vénissieux (FR)
(72) Inventeur: OLLIVE, Damien, 69008 Lyon (FR); LEROY, Régis, 69330 Meyzieu (FR)
(74) Mandataire: Cabinet Laurent & Charras

(56) Documents cités:
- FR-A1- 2 928 470
- US-A1- 2004 031 311
- US-A1- 2016 326 388
- US-A1- 2019 310 734
- SEO SUNGWON ET AL: "Flexible Touch Sensors Made of Two Layers of Printed Conductive Flexible Adhesives", SENSORS , vol. 16, no. 9 16 septembre 2016 (2016-09-16), page 1515, XP055773600, DOI: 10.3390/s16091515 Extrait de l'Internet: URL:https://www.ncbi.nlm.nih.gov/pmc/artic les/PMC5038788/pdf/sensors-16-01515.pdf

## Description

### DOMAINE TECHNIQUE

La présente invention concerne un capteur d'appui sécurisé, c'est-à-dire un capteur d'appui dont la détection est mesurée par deux sources distinctes de sorte à limiter les risques de mauvaises détections. Ce capteur d'appui est préférentiellement utilisé pour former une interface homme-machine configurée pour détecter l'appui d'un utilisateur, par exemple un bouton d'une machine ou un écran tactile.

L'invention concerne également un écran tactile formé à partir d'un écran sur lequel le capteur d'appui est monté.

L'invention trouve une application particulièrement avantageuse pour les capteurs d'appui de haute résistance.

L'invention peut être appliquée dans un grand nombre de domaines techniques pour lesquels il est recherché une grande sécurité dans les ordres transmis par une interface homme-machine, par exemple le domaine ferroviaire ou le domaine du nucléaire.

### ART ANTERIEUR

Les capteurs d'appui de haute résistance sont des capteurs configurés pour résister à des conditions environnementales particulièrement rudes. Par exemple, certaines normes imposent une résistance aux chocs de 0,7 Joule à 1 Joule, une résistance à des taux d'humidité compris entre 90 et 95%, une résistance à des températures variant entre -40 et +70°C, une résistance à des brouillards salins pendant une durée comprise entre 48 et 96 heures ou encore des contraintes d'immunité en champ rayonné de 10V/m à 20V/m.

En outre, il existe un grand nombre de capteurs d'appui différents, notamment les capteurs capacitifs et résistifs.

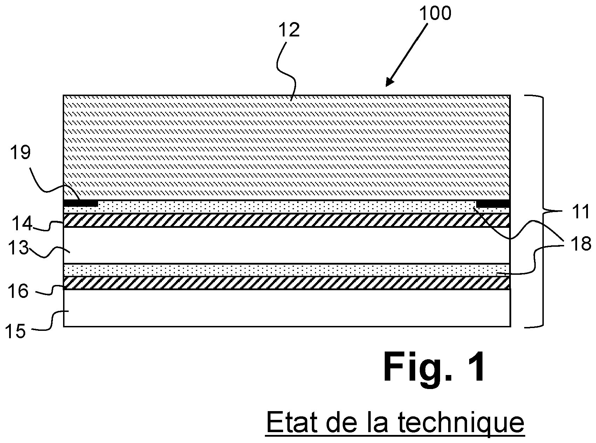

Tel qu'illustré sur la figure 1 de l'état de la technique, un détecteur capacitif 100 comporte classiquement une couche de protection 12, généralement réalisée en verre, sous laquelle sont disposées deux électrodes 14 et 16. La première électrode 14 est fixée sous la couche de protection 12 au moyen d'une première couche adhésive 18. Cette première électrode 14 est classiquement montée sur une première couche isolante 13.

Sous la première couche isolante 13, une seconde couche adhésive 18 est également utilisée pour fixer une seconde électrode isolante 16 également montée sur une seconde couche isolante **15.** La seconde électrode **16** peut être fixée sur un substrat, par exemple un écran ou un support quelconque, ou sur la seconde couche isolante **15.**

Pour obtenir des bords noirs autour du capteur d'appui **100,** il est également connu d'intégrer une occultation **19** dans la première couche adhésive **18** reliant la couche de protection **12** et la première couche isolante **13,** notamment pour former un capteur d'appui capacitif monté sur un écran. Pour ce faire, la couche de protection **12,** les couches isolantes **13, 15,** les couches adhésives **18** et les électrodes **14, 16** sont translucides et la seconde électrode **16** est déposée sur un écran de sorte à former un écran tactile utilisant la technologie capacitive.

Ce type de capteur d'appui capacitif est souvent mis en oeuvre pour former des capteurs d'appui haute résistance car la couche de protection **12** peut être dimensionnée pour répondre aux différentes contraintes de résistance.

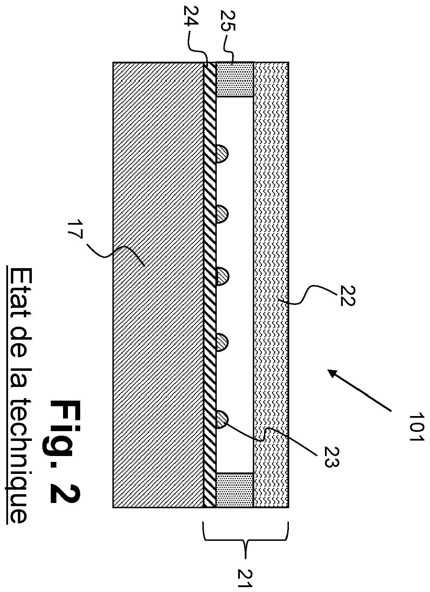

En variante, il est également possible de former un capteur d'appui en utilisant une technologie résistive, tel qu'illustré sur la figure 2 de l'état de la technique. Ce capteur résistif **101** comporte un détecteur résistif **21** formé par une couche supérieure déformable **22** reliée par un cadre **25** à un détecteur **24** monté sur un substrat 17. Le détecteur **24** présente également des conducteurs résistifs **23** permettant de détecter et de transmettre les déformations de la couche supérieure **22.**

Ces types de capteurs résistifs ou capacitifs sont classiquement mis en oeuvre pour former un écran tactile lorsqu'ils sont montés sur un écran.

Pour certaines applications de sécurité, il est recherché de pouvoir confirmer l'appui sur une interface homme-machine de sorte à éviter que ces capteurs ne détectent des appuis non souhaités, par exemple dus à la chute d'une goutte d'eau sur la couche supérieure **12** ou **22** ou d'une perturbation électromagnétique forte.

Pour ce faire, il existe des solutions combinant un détecteur capacitif ou résistif et un dispositif de vision permettant de contrôler que la détection de l'appui sur l'interface homme-machine du détecteur provient effectivement d'un appui intentionnel d'un utilisateur.

Ce dispositif de vision vise à invalider un appui détecté sur une interface homme-machine lorsque celui-ci provient, par exemple, de la présence d'une goutte d'eau.

Cependant, le dispositif de vision peut être inopérant dans certaines conditions d'éclairage ou en raison du positionnement d'un élément entre la face supérieure du capteur et la caméra du dispositif de vision.

Pour remédier à ce problème, il est recherché de pouvoir coupler un détecteur capacitif avec un détecteur résistif en disposant le détecteur capacitif sur le détecteur résistif pour utiliser la couche de protection **12** et obtenir un capteur haute résistance.

Cependant, en montant un détecteur capacitif classique sur un détecteur résistif, il n'est pas possible de mesurer les déformations de la couche supérieure **22** car l'élasticité de l'ensemble formant le détecteur capacitif **11** n'est pas suffisante pour que sa déformation soit captée par le détecteur résistif **21** tout en répondant aux contraintes normatives de résistance.

En effet, la couche de protection **12** du détecteur capacitif présente classiquement une épaisseur comprise entre 1 et 15 millimètres, et l'élasticité de cette couche de protection **12** est très faible. Ceci est d'autant plus vrai lorsqu'il est recherché un capteur avec une haute résistance.

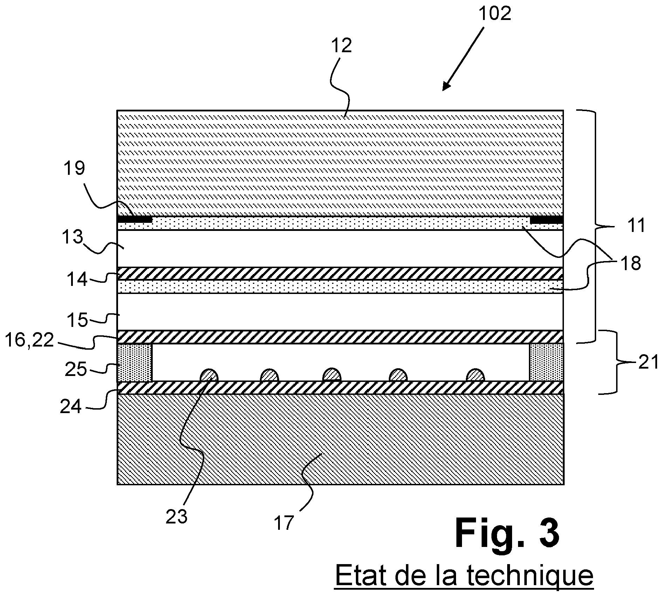

Pour répondre à ce problème, le document TWI 654 555 propose de combiner un détecteur capacitif **11** avec un détecteur résistif **21,** tel qu'illustré sur la figure 3 de l'état de la technique. La couche supérieure déformable **22** du détecteur résistif **21** est intégrée dans une couche formant la seconde électrode **16** du détecteur capacitif **11.** Pour ce faire, les électrodes **14** et **16** sont montées sous les couches isolantes **13, 15** contrairement aux détecteurs capacitifs classiques dans lesquels ces électrodes **14** et **16** sont montées sur les couches isolantes **13, 15.** Ainsi, le nombre de couches formant ce capteur hybride **102** est limité comparativement à l'association d'un détecteur capacitif **11** et d'un détecteur résistif **21** réalisés indépendamment.

Cependant, la fabrication de cette couche hybride, formant à la fois une partie du détecteur capacitif **11** et du détecteur résistif **21,** est particulièrement complexe à réaliser car il convient d'intercaler les différents motifs sans entraîner de phénomènes de couplage électromagnétique ou de court-circuit entre ces différents motifs. En outre, le retournement des électrodes **14** et **16** par rapport aux couches isolantes **13, 15** peut entraîner une baisse de sensibilité du capteur due à l'éloignement des électrodes **14** et **16** de la couche de protection **12.** Un autre exemple de capteur d'appui est décrit par le document FR2928470 A1.

Le problème technique de l'invention est donc de trouver une alternative pour obtenir un capteur d'appui hybride intégrant un détecteur capacitif et un détecteur résistif, tout en répondant aux contraintes de résistance mécanique, de résistance à l'humidité et aux champs rayonnés.

### EXPOSE DE L'INVENTION

L'invention est issue d'une découverte selon laquelle en associant un détecteur capacitif sur un détecteur résistif, les chocs subis par la couche de protection sont transmis à travers toutes les couches pour être dissipés dans le substrat, pour peu que le cadre du détecteur résistif soit suffisamment petit et que la couche de liaison entre les deux détecteurs soit suffisamment fine.

Fort de cette découverte, il est donc possible de réduire l'épaisseur de la couche de protection du détecteur capacitif bien en-dessous des épaisseurs classiquement utilisées pour faciliter la déformation de celle-ci et améliorer la détection d'un appui sur la couche de protection du détecteur capacitif par un détecteur résistif disposé en-dessous du détecteur capacitif tout en répondant aux contraintes des capteurs d'appui haute résistance.

A cet effet, selon un premier aspect, l'invention concerne un capteur d'appui comportant :
- un détecteur capacitif comportant : une couche de protection, une première électrode disposée sous ladite couche de protection, une première couche isolante disposée sous ladite première électrode , une seconde électrode disposée sous ladite première couche isolante et une seconde couche isolante disposée sous ladite seconde électrode ; et
un détecteur résistif formé par une couche supérieure déformable reliée à un détecteur disposé sous ladite couche supérieure déformable au moyen d'un cadre ; ledit détecteur étant fixé sur un substrat.

L'invention est caractérisée en ce que ledit détecteur capacitif est collé sur ledit détecteur résistif au moyen d'une couche adhésive dont l'épaisseur est inférieure à 0,5 mm ; et en ce que ledit capteur d'appui présente une surface inférieure à 1500 cm² ; et en ce que ladite couche de protection présente une épaisseur comprise entre 0,15 et 0,35 mm.

L'invention permet ainsi d'obtenir un capteur d'appui hybride, c'est-à-dire un capteur d'appui intégrant une détection capacitive et une détection résistive afin d'obtenir une information redondante lorsqu'une détection est réalisée par le capteur d'appui.

Bien que la couche supérieure soit particulièrement fine par rapport aux capteurs d'appui connus, la transmission des efforts subis par cette couche supérieure permet de répondre aux contraintes des capteurs haute résistance. Typiquement, pour un cadre dont la surface est inférieure à 1500 cm², c'est-à-dire une surface permettant de former un écran dont les dimensions sont inférieures à celles d'un écran 22 pouces, il est possible de répondre aux contraintes de résistance aux chocs des environnements industriels tout en utilisant une couche de protection dont l'épaisseur est comprise entre 0,15 et 0,35 mm.

Pour ce faire, la couche adhésive reliant les détecteurs capacitif et résistif doit présenter une épaisseur inférieure à 0,5 mm de sorte que les déformations subies par le détecteur capacitif puissent être transmises au substrat par l'intermédiaire du détecteur résistif.

De préférence, l'épaisseur de la couche adhésive est inférieure à 0,2 mm, par exemple comprise entre 0,04 et 0,1 mm. En effet, si la couche adhésive présente une épaisseur trop faible, il existe un risque de délamination du capteur d'appui entre les détecteurs capacitif et résistif. En outre, si la couche adhésive présente une épaisseur trop importante, les déformations du détecteur capacitif ne peuvent pas être transmises au substrat par l'intermédiaire du détecteur résistif.

Pour résister à la délamination entre les détecteurs capacitif et résistif, il est possible d'utiliser une colle très puissante pour former la couche adhésive. Par exemple, il est possible d'utiliser une colle qui n'est pas transparente en disposant la couche adhésive uniquement sur la périphérie du capteur d'appui.

La couche adhésive peut correspondre à une bande collante double face réalisée à partir d'un coeur flexible en acrylique, par exemple correspondant à la référence H7004, H7008 ou H7012 de la gamme Hypeijoint^{®} de la société Nitto^{®}.

Les dimensions limitées de la surface du capteur d'appui permettent de garantir la transmission des efforts subis par cette couche supérieure jusqu'au substrat. Pour ce faire, les efforts doivent être transmis par le cadre qui est disposé uniquement sur la périphérie du capteur d'appui si bien que, si le capteur d'appui présente une surface trop importante, la transmission des efforts est limitée.

Pour garantir la transmission des efforts et obtenir un capteur d'appui haute résistance, la surface du cadre est préférentiellement inférieure à 700 cm², c'est-à-dire une surface permettant de former un écran dont les dimensions sont inférieures à celles d'un écran 15 pouces. Pour augmenter encore la résistance du capteur d'appui, la surface du cadre peut être inférieure à 280 cm², c'est-à-dire une surface permettant de former un écran dont les dimensions sont inférieures à celles d'un écran 10 pouces.

L'élasticité du détecteur capacitif est également conditionnée par les dimensions totales du détecteur capacitif.

En utilisant des couches isolantes et des électrodes de faibles épaisseurs, par exemple des électrodes dont l'épaisseur est d'environ 70 µm et des couches isolantes dont l'épaisseur est d'environ 50 µm, il est possible d'obtenir un détecteur capacitif dont l'épaisseur totale est inférieure à 0,5 mm.

Pour ce faire, la couche de protection présente préférentiellement une épaisseur comprise entre 0,20 et 0,22 mm.

De préférence, l'épaisseur totale du détecteur capacitif est comprise entre 0,8 et 1 mm alors que l'épaisseur totale du détecteur résistif est comprise entre 1 et 3 mm.

Selon un second aspect, l'invention concerne un écran tactile comportant un écran sur lequel est monté un capteur d'appui selon le premier aspect de l'invention.

### DESCRIPTION SOMMAIRE DES FIGURES

La manière de réaliser l'invention ainsi que les avantages qui en découlent, ressortiront bien du mode de réalisation qui suit, donné à titre indicatif mais non limitatif, à l'appui des figures annexées dans lesquelles les figures 1 à 4 représentent :
La figure 1 : une représentation schématique en coupe d'un détecteur capacitif de l'état de la technique ;
La figure 2 : une représentation schématique en coupe d'un détecteur résistif de l'état de la technique ;
La figure 3 : une représentation schématique en coupe d'un capteur d'appui hybride de l'état de la technique ; et
La figure 4 : une représentation schématique en coupe d'un capteur d'appui selon un mode de réalisation de l'invention.

### DESCRIPTION DETAILLEE DE L'INVENTION

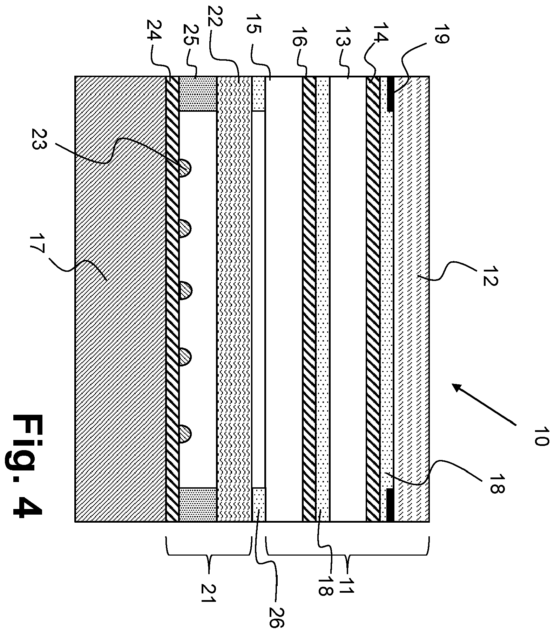

La figure 4 illustre un capteur d'appui 10 monté sur un substrat 17. Le substrat 17 peut correspondre à une surface plane inerte dans le cas d'un capteur d'appui 10 formant un actionneur simple, par exemple un bouton tactile d'une machine-outil.

De préférence, le substrat 17 correspond à une couche de matériau translucide et résistante, par exemple du verre trempé d'une épaisseur supérieure à 1 mm, de sorte à pouvoir former un écran tactile en disposant un écran sous le capteur d'appui 10.

Le capteur d'appui **10** comporte un détecteur capacitif **11** fixé par une couche adhésive **26** sur un détecteur résistif **21,** lui-même monté sur le substrat **17.**

Le détecteur capacitif **11** comporte une couche de protection **12,** par exemple réalisée en verre de type Gorilla Glass^{®}, sous laquelle sont disposées deux électrodes **14** et **16.** La première électrode **14** est fixée sous la couche de protection **12** au moyen d'une première couche adhésive **18** et d'une première couche isolante **13.** Sous la première électrode **14,** une seconde couche adhésive **18** est également utilisée pour fixer une seconde couche isolante **15** séparant les deux électrodes **14** et **16.**

Les deux électrodes **14** et **16** peuvent être réalisées par des nano-fils d'argent alors que les couches isolantes **13** et **15** peuvent être réalisées en polyéthylène téréphtalate (PET). L'ensemble formé par une électrode **14** et **16** et une couche isolante **13** et **15** peut présenter une épaisseur comprise entre 100 et 150 µm, par exemple une épaisseur de 125 µm.

Les couches adhésives **18** peuvent présenter une épaisseur comprise entre 50 et 120 µm, par exemple une épaisseur de 100 µm. Pour obtenir des bords noirs autour du capteur d'appui **10,** une occultation **19** peut être intégrée dans la première couche adhésive **18** reliant la couche de protection **12** et la première couche isolante **13.**

Ainsi, entre la couche de protection **12** et la couche adhésive **26,** le capteur capacitif **11** peut présenter une épaisseur de 0,45 mm, avec deux couches adhésives **18** de 100 µm et deux ensemble **13-16** de 125 µm.

Comparativement aux capteurs capacitifs existants, la finesse du capteur capacitif **11** est principalement obtenue par la couche de protection **12.** Selon l'invention, la couche de protection **12** présente une épaisseur comprise entre 0,15 et 0,35 mm.

De préférence, la couche de protection **12** présente une épaisseur comprise entre 0,20 et 0,22 mm, par exemple sensiblement de 0,21 mm.

Ainsi, le capteur capacitif **11** peut présenter une épaisseur totale comprise entre 0,6 et 0,9 mm, par exemple une épaisseur totale de 0,66 mm en considérant une couche de protection **12** de 0,21 mm et une épaisseur de 0,45 mm entre la couche de protection **12** et la couche adhésive **26.**

Selon un autre exemple, le capteur capacitif **11** peut présenter une épaisseur totale de 0,68 mm avec une couche de protection **12** de 0,33 mm et une épaisseur de 0,35 mm entre la couche de protection **12** et la couche adhésive **26.** Pour ce faire, deux couches adhésives **18** de 50 µm et deux ensemble **13-16** de 125 µm peuvent être utilisés.

La couche adhésive **26** peut être déposée sous toute la seconde électrode **16** du détecteur capacitif **11.** De préférence, la couche adhésive **26** est déposée uniquement sur une périphérie de la seconde électrode **16.** Selon l'invention, cette couche adhésive **26** présente une épaisseur inférieure à 0,5 mm. De préférence, l'épaisseur de la couche adhésive **26** est inférieure à 0,2 mm. Encore plus préférentiellement, l'épaisseur de la couche adhésive **26** est comprise entre 0,04 et 0,1 mm, par exemple une épaisseur de 0,08 mm.

Sous la couche adhésive **26,** le capteur d'appui **10** comporte le détecteur résistif **21.** Ce détecteur résistif **21** est formé par une couche supérieure déformable **22** reliée par un cadre **25** à un détecteur **24** monté sur un substrat **17.** Le détecteur **24** présente également des conducteurs résistifs **23** permettant de détecter et de transmettre les déformations de la couche supérieure **22.** De préférence, le détecteur résistif **21** présente une épaisseur totale comprise entre 1 et 3 mm.

Selon l'invention, le capteur d'appui **10** présente une surface inférieure à 1500 cm². Par exemple, le capteur d'appui **10** peut présenter une surface inférieure à 700 cm² ou une surface inférieure à 280 cm².

L'invention permet ainsi d'obtenir un capteur d'appui **10** redondant, c'est-à-dire avec deux moyens de détection distincts réalisés par un détecteur capacitif **11** et un détecteur résistif **21.**

En outre, l'invention permet également de former un capteur d'appui **10** de haute résistance.

## Revendications

1. Capteur d'appui (10) comportant :
- un détecteur capacitif (11) comportant : une couche de protection (12), une première électrode (14) disposée sous ladite couche de protection (12), une première couche isolante (13) disposée sous ladite première électrode (14), une seconde électrode (16) disposée sous ladite première couche isolante (13)et une seconde couche isolante (15) disposée sous ladite seconde électrode (16) ; et
- un détecteur résistif (21) formé par une couche supérieure déformable (22) reliée à un détecteur (24) disposé sous ladite couche supérieure déformable (22) au moyen d'un cadre (25) ; ledit détecteur (24) étant fixé sur un substrat (17) ;
***caractérisé en ce que*** ledit détecteur capacitif (11) est collé sur ledit détecteur résistif (21) au moyen d'une couche adhésive (26) dont l'épaisseur est inférieure à 0,5 mm ***et en ce que*** ledit capteur d'appui (10) présente une surface inférieure à 1500 cm² ***et en ce que*** ladite couche de protection (12) présente une épaisseur comprise entre 0,15 et 0,35 mm.

2. Capteur d'appui selon la revendication 1, ***dans lequel*** l'épaisseur de ladite couche adhésive (26) est inférieure à 0,2 mm.

3. Capteur d'appui selon la revendication 1 ou 2, ***dans lequel*** l'épaisseur de ladite couche adhésive (26) est comprise entre 0,04 et 0,1 mm.

4. Capteur d'appui selon l'une des revendications 1 à 3, ***dans lequel*** ladite couche adhésive (26) s'étend uniquement sur une périphérie dudit capteur d'appui (10).

5. Capteur d'appui selon l'une des revendications 1 à 4, ***dans lequel*** ledit capteur d'appui (10) présente une surface inférieure à 700 cm².

6. Capteur d'appui selon l'une des revendications 1 à 5, ***dans lequel*** ledit capteur d'appui (10) présente une surface inférieure à 280 cm².

7. Capteur d'appui selon l'une des revendications 1 à 6, ***dans lequel*** ledit détecteur capacitif (11) présente une épaisseur totale comprise entre 0,6 et 0,9 mm.

8. Capteur d'appui selon l'une des revendications 1 à 7, ***dans lequel*** ledit détecteur résistif (21) présente une épaisseur totale comprise entre 1 et 3 mm.

9. Capteur d'appui selon l'une des revendications 1 à 8, ***dans lequel*** ladite couche de protection (12) présente une épaisseur comprise entre 0,20 et 0,33 mm.

10. Ecran tactile comportant un écran sur lequel est monté un capteur d'appui (10) selon l'une des revendications 1 à 9.

## Patentansprüche

1. Berührungssensor (10) umfassend:
- einen kapazitiven Sensor (11), umfassend: eine Schutzschicht (12), eine erste Elektrode (14), angeordnet unter dieser Schutzschicht (12), eine erste Isolierschicht (13), angeordnet unter dieser ersten Elektrode (14), eine zweite Elektrode (16), angeordnet unter der erwähnten ersten Isolierschicht (13) und eine zweite Isolierschicht (15), angeordnet unter dieser zweiten Elektrode (16); und
- einen Widerstandssensor (21), gebildet aus einer verformbaren oberen Schicht (22), verbunden mit einem Sensor (24), angeordnet unter dieser verformbaren oberen Schicht (22) mittels eines Rahmens (25); dieser Sensor (24) ist auf einem Substrat (17) befestigt, ***dadurch gekennzeichnet, dass*** dieser kapazitive Sensor (11) mittels einer Haftschicht (26) auf diesen Widerstandssensor (21) geklebt ist, deren Dicke kleiner ist als 0,5 mm ***und dadurch, dass*** die erwähnte Berührungssensor (10) eine Fläche von weniger als 1500 cm² aufweist ***und dadurch, dass*** diese Schutzschicht (12) eine Dicke zwischen 0,15 und 0,35 mm aufweist.

2. Berührungssensor nach Anspruch 1, ***bei dem*** die Dicke der erwähnten Haftschicht (26) kleiner als 0,2 mm ist.

3. Berührungssensor nach Anspruch 1 oder 2, ***bei dem*** die Dicke dieser Haftschicht (26) zwischen 0,04 und 0,1 mm liegt.

4. Berührungssensor nach einem der Ansprüche 1 bis 3, ***bei dem*** diese Haftschicht (26) sich nur über eine Peripherie dieses Berührungssensors (10) erstreckt.

5. Berührungssensor nach einem der Ansprüche 1 bis 4, ***bei dem*** dieser Berührungssensor (10) eine Fläche von weniger als 700 cm² hat.

6. Berührungssensor nach einem der Ansprüche 1 bis 5, ***bei dem*** dieser Berührungssensor (10) eine Fläche von weniger als 280 cm² hat.

7. Berührungssensor nach einem der Ansprüche 1 bis 6, ***bei dem*** der erwähnte kapazitive Sensor (11) eine Gesamtdicke zwischen 0,6 und 0,9 mm hat.

8. Berührungssensor nach einem der Ansprüche 1 bis 7, ***bei dem*** der erwähnte Widerstandssensor (21) eine Gesamtdicke zwischen 1 und 3 mm hat.

9. Berührungssensor nach einem der Ansprüche 1 bis 8, ***bei dem*** die erwähnte Schutzschicht (12) eine Dicke zwischen 0,20 und 0,33 mm hat.

10. Berührungsbildschirm, umfassend einen Bildschirm, auf den ein Berührungssensor (10) nach einem der Ansprüche 1 bis 9 montiert ist.

## Claims

1. A touch sensor (10) comprising:
- a capacitive detector (11) comprising: a protective layer (12), a first electrode (14) disposed below said protective layer (12), a first insulating layer (13) disposed below said first electrode (14), a second electrode (16) disposed below said first insulating layer (13) and a second insulating layer (15) disposed below said second electrode (16); and
- a resistive detector (21) formed by a deformable upper layer (22) associated with a detector (24) disposed below said deformable upper layer (22) by a frame (25); said detector (24) being fixed to a substrate (17);
***characterized in that*** said capacitive detector (11) is bonded to said resistive detector (21) by an adhesive layer (26) having a thickness of less than 0.5 mm ***and in that*** said touch sensor (10) has a surface area of less than 1500 cm² ***and in that*** said protective layer (12) has a thickness in the range 0.15 to 0.35 mm.

2. The touch sensor as claimed in claim 1, ***in which*** the thickness of said adhesive layer (26) is less than 0.2 mm.

3. The touch sensor as claimed in claim 1 or 2, ***in which*** the thickness of said adhesive layer (26) is in the range 0.04 to 0.1 mm.

4. The touch sensor as claimed in one of claims 1 to 3, ***in which*** said adhesive layer (26) extends over only a periphery of the touch sensor (10).

5. The touch sensor as claimed in one of claims 1 to 4, ***in which*** said touch sensor (10) has a surface area of less than 700 cm².

6. The touch sensor as claimed in one of claims 1 to 5, ***in which*** said touch sensor (10) has a surface area of less than 280 cm².

7. The touch sensor as claimed in one of claims 1 to 6, ***in which*** said capacitive detector (11) has a total thickness in the range 0.6 to 0.9 mm.

8. The touch sensor as claimed in one of claims 1 to 7, ***in which*** said resistive detector (21) has a total thickness in the range 1 to 3 mm.

9. The touch sensor as claimed in one of claims 1 to 8, ***in which*** said protective layer (12) has a thickness in the range 0.20 to 0.33 mm.

10. A touchscreen comprising a screen on which a touch sensor (10) as claimed in one of claims 1 to 9 is mounted.
